(19) Europäisches Patentamt
European Patent Office
Office européen des brevets

(11) **EP 4 006 674 B1**

(12) **EUROPEAN PATENT SPECIFICATION**

(45) Date of publication and mention
of the grant of the patent:
**30.10.2024 Bulletin 2024/44**

(21) Application number: **20209838.0**

(22) Date of filing: **25.11.2020**

(51) International Patent Classification (IPC):
***G05B 23/02*** *(2006.01)*

(52) Cooperative Patent Classification (CPC):
**G05B 23/0245**

(54) **METHOD AND SYSTEM FOR MAINTAINING A PLANT**

VERFAHREN UND SYSTEM ZUR INSTANDHALTUNG EINER ANLAGE

PROCÉDÉ ET SYSTÈME DE MAINTENANCE D'UNE INSTALLATION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**01.06.2022 Bulletin 2022/22**

(73) Proprietor: **Siemens Aktiengesellschaft
80333 München (DE)**

(72) Inventors:
• **Grimm, Stephan
81825 München (DE)**
• **Hildebrandt, Marcel
80634 München (DE)**
• **Himmelhuber, Anna
93142 Maxhütte-Haidhof (DE)**
• **Liu, Yushan
81737 München (DE)**
• **Ringsquandl, Martin
83022 Rosenheim (DE)**

(74) Representative: **Siemens Patent Attorneys
Postfach 22 16 34
80506 München (DE)**

(56) References cited:
**EP-A1- 2 447 845        US-A1- 2018 075 359
US-A1- 2019 196 460**

• **JENS LEHMANN: "DL-Learner: Learning
Concepts in Description Logics", JOURNAL OF
MACHINE LEARNING RESEARCH, MIT PRESS ,
CAMBRIDGE , MA, US, vol. 10, 1 December 2009
(2009-12-01), pages 2639 - 2642, XP058041036,
ISSN: 1532-4435**
• **JENS LEHMANN: "DL-Learner: Learning
Concepts in Description Logics", JOURNAL OF
MACHINE LEARNING RESEARCH, MIT PRESS ,
CAMBRIDGE , MA, US, vol. 10, 1 December 2009
(2009-12-01), pages 2639 - 2642, XP058264306,
ISSN: 1532-4435**

# Description

The invention relates a method and a system for maintaining a plant.

Plant equipment failures, in particular machine and/or device or specifically component failures, can have an adverse impact on the operational efficiency of any production or energy provision process. Such failures can lead to long and unplanned downtimes, broken machines, etc. Therefore, knowing and preventing failures well ahead their potential occurrence helps to increase production and to avoid maintenance or equipment replacement costs.

Preventive maintenance describes a scheme where machines are maintained in fixed, manually scheduled intervals. It is the de-facto standard in many industries. This practice relies on visual inspection, along with routine machinery health checks. However, since the maintenance intervals tend to be agnostic towards the working condition and health status of the machine, they are rarely timed optimally and do not target specific components that actually require maintenance. That is why preventive maintenance may take up a tremendous amount of resources and time and can lead to unnecessary interruptions if the maintenance is scheduled too late or too early.

Predictive maintenance describes a practice where a method of preventing the failure of expensive manufacturing or operational equipment is employed. The idea is often to analyze data throughout the production to pinpoint unusual behavior ahead of time to avoid machine downtime by taking appropriate measures early. Previously, simple heuristics have been applied (e.g., based on thresholds for sensor signals) that trigger maintenance events. However, such kind of simple rules are often not expressive enough to detect various kinds of abnormalities. Machine learning algorithms can be a remedy in this situation. However, many popular learning methods such as deep learning techniques suffer from the black box problem in the sense that the user (e.g., an operator of a plant) can hardly comprehend what contributed to a particular prediction.

Document [1]describes a framework for learning in description logics and OWL, OWL being the official W3C standard ontology language for the Semantic Web. Concepts in this language can be learned for constructing and maintaining OWL ontologies or for solving problems similar to those in Inductive Logic Programming.

Document [3] discloses a computer-implemented method for detecting faults and events related to a system includes receiving sensor data from a plurality of sensors associated with the system. A hierarchical failure model of the system is constructed using (i) the sensor data, (ii) fault detector data, (iii) prior knowledge about system variables and states, and (iii) one or more statistical descriptions of the system. The failure model comprises a plurality of diagnostic variables related to the system and their relationships. Probabilistic reasoning is performed for diagnostic or prognostic purposes on the system using the failure model to derive knowledge related to potential or actual system failures.

Document [4] discloses a method, system, and computer software for automated system diagnostic with description logic reasoning, the method for system diagnosis detection, comprising employing a logic-based formal tentative diagnosis detection method, wherein the formal tentative diagnosis detection method is built by a plurality of ontologies that are interrelated via a plurality of logical statements, wherein the plurality of ontologies represent system observables and expert knowledge regarding the system, and the system diagnosis detection model is characterized in that the expert knowledge regarding the system is coordinated with the system observables to obtain a system diagnostic.

Document [5] discloses mechanisms in which a first knowledge graph, comprising nodes representing entities and edges between nodes indicative of a relationship between the entities, is received. The mechanisms identify a candidate missing edge connecting a node of the first knowledge graph to another node not present in the first knowledge graph and evaluate the candidate missing edge to determine if the candidate missing edge should be added to the first knowledge graph. The mechanisms expand the first knowledge graph to include the candidate missing edge connecting the node to a newly added node that is newly added to the first knowledge graph, to thereby generate an expanded knowledge graph, in response to the evaluation indicating that the candidate missing edge should be added to the first knowledge graph. The mechanisms then perform an operation on the expanded knowledge graph to generate a knowledge output.

It is an object of the invention to provide an explainable predictive maintenance process to improve to the aforementioned state of the art.

This is solved by what is disclosed in the independent claims. Advantageous embodiments are described in the dependent claims.

An aspect of the invention is a method for maintaining a plant comprising the following operations performed by at least one processor:

a) extracting events from a given ontology representing knowledge about the plant equipment and plant properties and about the (failure and non-failure) states of the plant equipment at given points of time along with an event,

b) obtaining defined failure and non-failure classes describing under which condition failure occurs and no failure is expected,

c) assigning at least one of the events (examples) to each failure class by identifying failure and non-failure events from all extracted events,

d) applying inductive logic programming (ILP) by feeding the inductive logic programming with the failure and non-failure events, whereby the inductive logic programming generates a set of class expressions whereby each class expression describes under which condition a failure of its failure class occurs, wherein each class expression is combined with predictive accuracy which indicates the proportion of covered failure and non-failure class events by said class expression, and

e) outputting, by the at least one processor accessing an output device, at least one failure class and predictive failure occurrence to a user and initiating maintenance measures for the maintenance of the plant when the plant equipment enters into another state than said states and if the other state matches at least one class expression of the generated set of class expressions and if the predictive accuracy surpasses a pre-determined threshold.

The maintenance process is predictable and explainable for a user. It is based on the classification of equipment failures through learning a set of rules, specifically a set of class expressions that describes under which conditions each of the failures and/ or non-failures occurs. Failures could be, e.g., a defect of a machine and/or component, a congestion on the conveyor belt, or a crack in a device. Non-failures can mean that equipment, machine, device and/or component is in a good condition or state in that no failure is expected. For learning the class expressions, domain expertise is exploited from background information in form of ontologies. The provided or given ontology describes knowledge about the plant equipment and plant properties which can be: plant states of the plant and of the plant equipment or particular of plant equipment components including their properties (e.g. location, exposure, material etc.) which are recorded in distances of time at different timestamps. So, the set of states is a discrete set.

The invention provides the following benefits: The method reduces unnecessary downtimes by predicting maintenance needs before the equipment breaks down. To prevent redundant maintenance, it takes the actual working conditions and the current status of the plant and equipment into account for the prediction. Inductive logic programming provides class expressions that act as rules and are interpretable by humans. By comparing the status of the plant and the class expressions, the domain experts or operators of the plant can understand why a failure will occur and act accordingly. The explanations coming from the class expressions improve the transparency and trustworthiness of the maintenance process.

According to an embodiment of the invention the class expressions can be ordered by their predictive accuracy. A failure event represents a positive example whereas a non-failure event represents a negative example.

The proportion of the covered examples means the number of positive examples covered by said class expression and the number of negative examples not covered by said class expression, divided by the number of all examples.

The inductive logic programming can be fed only with selected or selectable failure class events.

A further aspect of the invention is a system for maintaining a plant comprising at least one processor which is adapted to perform the following operations:

- extracting events from a given ontology representing knowledge about the plant equipment and plant properties and about the (failure and non-failure) states of the plant equipment at given points of time along with an event if a failure occurs,
- receiving defined failure and non-failure classes describing under which condition failure occurs and no failure is expected,
- assigning at least one of the events (examples) to each failure class by identifying failure and non-failure events from all extracted events,
- applying inductive logic programming by feeding the inductive logic programming with the failure and non-failure events, whereby the inductive logic programming generates a set of class expressions whereby each class expression describes under which condition a failure of its failure class occurs,
- outputting at least one failure class and predictive failure occurrence and initiating maintenance measures for the maintenance of the plant when the plant equipment enters into another state than said states and if the other state matches at least one class expression of the generated set of class expressions and if the predictive accuracy surpasses a pre-determined threshold.

Embodiments as described above for the method can be analogous applied for the system and for computer program (product) and for the computer-readable storage medium.

This system which can be implemented by hardware, firmware and/or software or a combination of them.

The computer-readable storage medium stores instructions executable by one or more processors of a computer, wherein execution of the instructions causes the computer system to perform the method.

The computer program (product) is executed by one or more processors of a computer and performs the method.

The foregoing and other aspects of the present invention are best understood from the following detailed description when read in connection with the accompanying drawings. For the purpose of illustrating the invention, there are shown in the drawings embodiments that are presently preferred, it being understood, however, that the invention is not limited to the specific instrumentalities disclosed. Included in the drawings are the following figures:

Figure 1      shows static and temporal backround knowledge from an ontology represented by so called Manchester OWL syntax (see [2]),

Figure 2    shows a search tree for the ILP, and

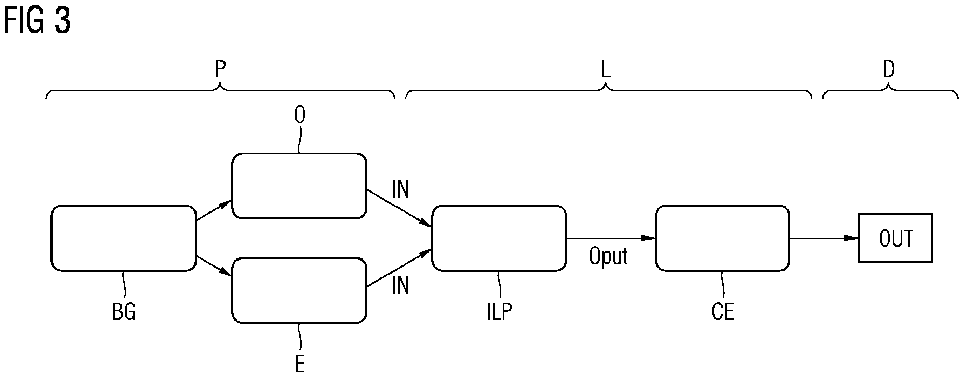

Figure 3    depicts a workflow regarding the inventive method.

The following explanation relates to a method and a system for maintaining a plant.

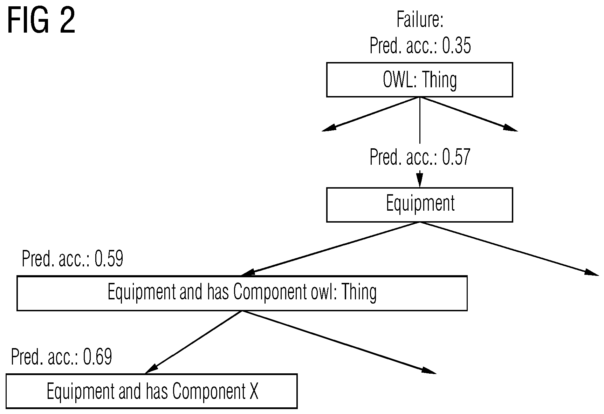

According to figure 2 the workflow regarding the inventive method can be subdivided into three major parts: the preprocessing P, learning L, and deployment D phase:

- **preprocessing phase:** The information about the instances *I* (events) are included by an ontology 0. In order to achieve reliable failure predictions and meaningful rules for these predictions, the individuals in the ontology need to include all available (background) knowledge BG which would be e.g. information detailing the plant equipment and plant equipment properties, such as when the equipment was built, which material was used, which failures have occurred, how long the machine has been in operation, the location of the machine, etc. The events can be extracted from the given ontology. Concretely, during the production process, the status of the plant and plant equipment is recorded in given points of time along with the information if a failure occurs. In case a failure occurs, all information regarding the failure is also recorded. The information at a specific timestamp is called an event. Each event at which a particular failure occurs represents a positive example for an assigned specific failure class; otherwise, the event is a negative example for this assigned failure class. A rule, called expression, is also learned for the failure class when no failure occurs. After obtaining and/or receiving said positive and negative examples E of a class, inductive logic programming ILP is applied in order to automatically generate at least one class expression that covers all positive examples and no negative examples. Then, given the new and/or another status of the plant and equipment, it is predictable if a failure and which kind of failure will occur by comparing the current status information with the class expressions. The class expressions can be verbalized to provide an understandable explanation to a user, e.g. domain expert, who can decide on appropriate measures for maintenance.

- **learning phase:** The learning phase receives as an Input: IN:

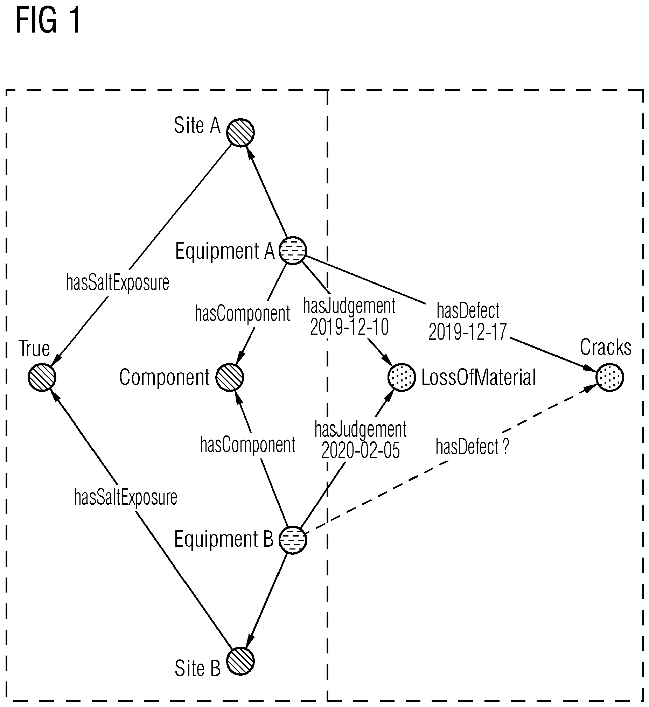

    - Ontology 0 (e.g., in OWL, see figure 1) containing background knowledge (TBox) and information about the instances I (ABox)

    - A set of classes C, containing all failure classes and a no-failure class
    - For each class c CC, a set of positive examples $E_c^+$
    - For each class c CC, a set of negative examples $E_c^-$

      An ILP component, e.g., the framework DL-Learner [1], takes the positive examples for a failure class c and creates and tests possible class expressions $CE_c$ using the background information from the ontology 0 as shown in Figure 2. Negative examples do not lead to the failure and should not be covered by the learned $CE_c$.

      The background knowledge that is used for learning the class expressions CE is captured by semantic web technologies, more specifically, by ontologies describing cyber-physical systems. This background knowledge represents domain knowledge about the equipment of a production plant, including, e.g., individual components, geographical details like temperature, exposure to elements (wind, sea water), temporal discretization, and all further information available that can have an influence on potential failures. The set of instances I contains the information about the plant at different timestamps (events).

      As Output Oput a set of class expressions **CE** is generated:
      for each class c EC, a class expression $CE_c$ is learned. The resulting class expressions are ordered by predictive accuracy, which indicates the proportion of positive examples are covered.

The workflow of the inventive method is illustrated with an example of the failure type "crack", referring to a crack in the material of the production equipment. The same mechanism can be applied to any type of failure if enough background information (e.g., influencing factors) and instances (especially positive examples) are available. Figure 1 illustrates a concrete application scenario wherein on the left-hand side static background knowledge and on the right hand side temporal background knowledge for equipment A and B is shown. The static information includes a component of the equipment (hasComponent), the location of the equipment (site A or B), and whether the equipment is exposed to salt (hasSaltExposure). The temporal background knowledges details preventive maintenance information, i.e., judgements about the state of the equipment at a given or certain point of time.

Equipment A is a positive example for the failure "crack", from which the ILP learns a class expression about when and why cracks occur. All possible class expressions can be ordered by predictive accuracy, which is measured as the number of correctly classified examples divided by the number of all examples. Depending on how many positive examples the class expression covers, the predictive accuracy of the expression is computed. This expression can then be used to determine if and when equipment B will have the same failure.

The learned class expression given by the class expression learner has OWL Manchester Syntax [2]: HasDefectCrack := hasJudgment some LossOfMaterial and isLocatedAt some (hasSaltExposure exactly True) and hasComponent some Component#1

The Manchester OWL syntax is a user-friendly syntax for OWL Description Logics, fundamentally based on collecting all information about a particular class, property, or individual into a single construct. A possible explanation can be inferred from the class expression and the predictive accuracy, which can be verbalized as follows to make it more understandable: "Equipment located on a site with salt exposure, containing component x, and having judgment y, has a crack with a predictive accuracy of 85%".

As afore described, the class expression for a failure (crack) prediction is created by ILP, which can be seen as a set of rules for when a crack occurs. Figure 2 shows an ILP search tree for the failure (crack), where each class expression is marked with the predictive accuracy.

- **deployment phase:** at least one failure class and predictive failure occurrence are shown on a output device OUT. A user (domain expert e.g., the operator of a plant) examines the generated class expressions preferably combined with the predictive accuracy. The user decides which maintenance operations are needed and can adjust the maintenance schedule accordingly. It would also be possible to directly and/or automatically initiate maintenance the equipment if, e.g., the predictive accuracy surpasses a certain threshold. For better interpretability, the class expressions could be mapped to natural language.

The method can be executed by at least one processor such as a microcontroller or a microprocessor, by an Application Specific Integrated Circuit (ASIC), by any kind of computer, including mobile computing devices such as tablet computers, smartphones or laptops, or by one or more servers in a control room or cloud.

For example, a processor, controller, or integrated circuit of the (computer) system and/or another processor may be configured to implement the acts described herein.

The above-described method may be implemented via a computer program product including one or more computer-readable storage media having stored thereon instructions executable by one or more processors of a computing system. Execution of the instructions causes the computing system to perform operations corresponding with the acts of the method described above.

The instructions for implementing processes or methods described herein may be provided on non-transitory computer-readable storage media or memories, such as a cache, buffer, RAM, FLASH, removable media, hard drive, or other computer readable storage media. A processor performs or executes the instructions to train and/or apply a trained model for controlling a system. Computer readable storage media include various types of volatile and non-volatile storage media. The functions, acts, or tasks illustrated in the figures or described herein may be executed in response to one or more sets of instructions stored in or on computer readable storage media. The functions, acts or tasks may be independent of the particular type of instruction set, storage media, processor or processing strategy and may be performed by software, hardware, integrated circuits, firmware, micro code and the like, operating alone or in combination. Likewise, processing strategies may include multiprocessing, multitasking, parallel processing and the like.

The invention has been described in detail with reference to embodiments thereof and examples. Variations and modifications may, however, be effected within the scope of the invention covered by the claims. The phrase "at least one of A, B and C" as an alternative expression may provide that one or more of A, B and C may be used.

The terminology used herein is for the purpose of describing particular embodiments only and is not intended to be limiting of example embodiments of the invention.

None of the elements recited in the claims are intended to be a means-plus-function element unless an element is expressly recited using the phrase "means for" or, in the case of a method claim, using the phrases "operation for" or "step for".

While the present invention has been described above by reference to various embodiments, it should be understood that many changes and modifications may be made to the described embodiments. It is therefore intended that the foregoing description be regarded as illustrative rather than limiting.

References

[1] Jens Lehmann. 2009. DL-Learner: Learning Concepts in Description Logics. The Journal of Machine Learning Research 10 (12/1/2009), 2639-2642.

[2] https://en.wikipedia.org/wiki/Web_Ontology_Language

[3] US 2019/196460 A1 (SIEMENS) 27 June 2019

[4] EP 2 447 845 A1 (SIEMENS) 2 May 2012

[5] US 2018/075359 A1 (IBM) 15 March 2018

**Claims**

1. Method for maintaining a plant comprising the following operations performed by at least one processor:

   a) extracting events from a given ontology (O) representing knowledge (BG) about the plant equipment and plant properties and about the states of the plant equipment at given points of time along with an event if a failure occurs,
   b) obtaining defined failure and non-failure classes describing under which condition failure occurs and no failure is expected,
   c) assigning at least one of the events (E) to each failure class by identifying failure and non-failure events from all extracted events,
   d) applying inductive logic programming (ILP) by feeding the inductive logic programming with the failure and non-failure events, whereby the inductive logic programming generates a set of class expressions whereby each class expression (CE) describes under which condition a failure of its failure class occurs, wherein each class expression is combined with predictive accuracy which indicates the proportion of covered failure and non-failure class events by said class expression, and
   e) outputting, by the at least one processor accessing an output device, at least one failure class and predictive failure occurrence to a user and initiating maintenance measures for the maintenance of the plant when the plant equipment enters into another state than said states and if the other state matches at least one class expression of the generated set of class expressions and if the predictive accuracy surpasses a pre-determined threshold.

2. Method according to the preceding claim, wherein the class expressions are ordered by their predictive accuracy.

3. Method according to at least one of the preceding claims, wherein the inductive logic programming is fed only with selected failure class events.

4. System for maintaining a plant comprising at least one processor which is adapted to perform the following operations:

   - extracting events from a given ontology (O) representing knowledge (BG) about the plant equipment and plant properties and about the states of the plant equipment at given points of time along with an event if a failure occurs,
   - receiving defined failure and non-failure classes describing under which condition failure occurs and no failure is expected,
   - assigning at least one of the events (E) to each failure class by identifying failure and non-failure events from all extracted events,
   - applying inductive logic programming (ILP) by feeding the inductive logic programming with the failure and non-failure events, whereby the inductive logic programming generates a set of class expressions (CE) whereby each class expression describes under which condition a failure of its failure class occurs, wherein each class expression is combined with predictive accuracy which indicates the proportion of covered failure and non-failure class events by said class expression, and
   - outputting at least one failure class and predictive failure occurrence and initiating maintenance measures for the maintenance of the plant when the plant equipment enters into another state than said states and if the other state matches at least one class expression of the generated set of class expressions and if the predictive accuracy surpasses a pre-determined threshold.

5. System according to the preceding claim, wherein further operation comprises: ordering the class expressions by their predictive accuracy.

6. System according to at least one of the preceding system claims, wherein further operation comprises: feeding the inductive logic programming only with selected failure events.

7. Computer program product which is being executed by one or more processors of a computer in order to perform a method according to any of the preceding method claims.

8. Computer readable storage medium with a computer program product according to the preceding claim.

**Patentansprüche**

1. Verfahren zum Instandhalten einer Anlage, das folgende Operationen umfasst, die von mindestens einem Prozessor durchgeführt werden:

   a) Extrahieren von Ereignissen aus einer gegebenen Ontologie (O), die Wissen (BG) zu Ausrüstung und Eigenschaften der Anlage und zu den Zuständen der Anlagenausrüstung zu gegebenen Zeitpunkten zusammen mit einem Ereignis repräsentiert, wenn es zu einem Fehler kommt,

b) Abrufen festgelegter Fehler- und Kein-Fehler-Klassen, die beschreiben, unter welcher Bedingung es zu einem Fehler kommt und kein Fehler erwartet wird,

c) Zuordnen mindestens eines der Ereignisse (E) zu jeder Fehlerklasse durch Identifizieren von Fehler- und Kein-Fehler-Ereignissen unter allen extrahierten Ereignissen,

d) Anwenden von induktiver logischer Programmierung (ILP) durch Versorgen der induktiven logischen Programmierung mit den Fehler- und Kein-Fehler-Ereignissen, wodurch die induktive logische Programmierung einen Satz Klassenausdrücke erzeugt, wodurch jeder Klassenausdruck (CE) beschreibt, unter welcher Bedingung ein Fehler aus seiner Fehlerklasse vorkommt, wobei jeder Klassenausdruck mit Vorhersagegenauigkeit kombiniert ist, die den Anteil von durch den Klassenausdruck abgedeckten Fehler- und Kein-Fehler-Klassenereignissen angibt, und

e) Ausgeben mindestens einer Fehlerklasse und eines Vorkommens eines Vorhersagefehlers durch den mindestens einen auf eine Ausgabevorrichtung zugreifenden Prozessor für einen Benutzer und Initiieren von Instandhaltungsmaßnahmen für die Instandhaltung der Anlage, wenn die Anlagenausrüstung in einen anderen Zustand als die Zustände übergeht und der andere Zustand mindestens einem Klassenausdruck des erzeugten Satzes Klassenausdrücke entspricht und die Vorhersagegenauigkeit einen vorgegebenen Grenzwert übersteigt.

2. Verfahren nach dem vorhergehenden Anspruch, wobei die Klassenausdrücke nach ihrer Vorhersagegenauigkeit geordnet werden.

3. Verfahren nach mindestens einem der vorhergehenden Ansprüche, wobei die induktive logische Programmierung nur mit ausgewählten Fehlerklassenereignissen versorgt wird.

4. System zum Instandhalten einer Anlage, das mindestens einen Prozessor umfasst, der so ausgelegt ist, dass er folgende Operationen durchführt:

- Extrahieren von Ereignissen aus einer gegebenen Ontologie (O), die Wissen (BG) zu Ausrüstung und Eigenschaften der Anlage und zu den Zuständen der Anlagenausrüstung zu gegebenen Zeitpunkten zusammen mit einem Ereignis repräsentiert, wenn es zu einem Fehler kommt,
- Empfangen festgelegter Fehler- und Kein-Fehler-Klassen, die beschreiben, unter welcher Bedingung es zu einem Fehler kommt und kein Fehler erwartet wird,
- Zuordnen mindestens eines der Ereignisse (E) zu jeder Fehlerklasse durch Identifizieren von Fehler- und Kein-Fehler-Ereignissen unter allen extrahierten Ereignissen,
- Anwenden von induktiver logischer Programmierung (ILP) durch Versorgen der induktiven logischen Programmierung mit den Fehler- und Kein-Fehler-Ereignissen, wodurch die induktive logische Programmierung einen Satz Klassenausdrücke (CE) erzeugt, wodurch jeder Klassenausdruck beschreibt, unter welcher Bedingung ein Fehler aus seiner Fehlerklasse vorkommt, wobei jeder Klassenausdruck mit Vorhersagegenauigkeit kombiniert ist, die den Anteil von durch den Klassenausdruck abgedeckten Fehler- und Kein-Fehler-Klassenereignissen angibt, und
- Ausgeben mindestens einer Fehlerklasse und eines Vorkommens eines Vorhersagefehlers und Initiieren von Instandhaltungsmaßnahmen für die Instandhaltung der Anlage, wenn die Anlagenausrüstung in einen anderen Zustand als die Zustände übergeht und der andere Zustand mindestens einem Klassenausdruck des erzeugten Satzes Klassenausdrücke entspricht und die Vorhersagegenauigkeit einen vorgegebenen Grenzwert übersteigt.

5. System nach dem vorhergehenden Anspruch, wobei eine weitere Operation Folgendes umfasst: Ordnen der Klassenausdrücke nach ihrer Vorhersagegenauigkeit.

6. System nach mindestens einem der vorhergehenden Systemansprüche, wobei eine weitere Operation Folgendes umfasst: Versorgen der induktiven logischen Programmierung nur mit ausgewählten Fehlerereignissen.

7. Computerprogrammprodukt, das von einem oder mehreren Prozessoren eines Computers ausgeführt wird, damit ein Verfahren nach einem der vorhergehenden Verfahrensansprüche durchgeführt wird.

8. Computerlesbares Speichermedium mit einem Computerprogrammprodukt nach dem vorhergehenden Anspruch.

**Revendications**

1. Procédé de maintenance d'une installation comprenant les opérations suivantes réalisées par au moins un processeur :

a) extraire des événements à partir d'une ontologie (O) donnée représentant des connaissances (BG) concernant l'équipement d'installation et des propriétés d'installation et concernant les états de l'équipement d'installation à des instants donnés conjointement avec un événement si une défaillance survient,

b) obtenir des classes de défaillance et de non-défaillance définies décrivant sous quelle condition une défaillance survient et aucune défaillance n'est attendue,

c) attribuer au moins l'un des événements (E) à chaque classe de défaillance par l'identification d'événements de défaillance et de non-défaillance parmi tous les événements extraits,

d) appliquer une programmation logique inductive (ILP) par l'alimentation de la programmation logique inductive avec les événements de défaillance et de non-défaillance, la programmation logique inductive générant un ensemble d'expressions de classe, chaque expression de classe (CE) décrivant sous quelle condition une défaillance de sa classe de défaillance survient, dans lequel chaque expression de classe est combinée avec une précision prédictive qui indique la proportion d'événements de classe de défaillance et de non-défaillance couverts par ladite expression de classe, et

e) délivrer en sortie, par l'au moins un processeur accédant à un dispositif de sortie, au moins une classe de défaillance et une survenue de défaillance prédictive vers un utilisateur et initier des mesures de maintenance pour la maintenance de l'installation lorsque l'équipement d'installation entre dans un autre état que lesdits états et si l'autre état concorde avec au moins une expression de classe de l'ensemble généré d'expressions de classe et si la précision prédictive dépasse un seuil prédéterminé.

2. Procédé selon la revendication précédente, dans lequel les expressions de classe sont mises en ordre selon leur précision prédictive.

3. Procédé selon au moins l'une des revendications précédentes, dans lequel la programmation logique inductive est alimentée uniquement avec des événements de classe de défaillance sélectionnés.

4. Système de maintenance d'une installation comprenant au moins un processeur qui est conçu pour réaliser les opérations suivantes :

- extraire des événements à partir d'une ontologie (O) donnée représentant des connaissances (BG) concernant l'équipement d'installation et des propriétés d'installation et concernant les états de l'équipement d'installation à des instants donnés conjointement avec un événement si une défaillance survient,

- recevoir des classes de défaillance et de non-défaillance définies décrivant sous quelle condition une défaillance survient et aucune défaillance n'est attendue,

- attribuer au moins l'un des événements (E) à chaque classe de défaillance par l'identification d'événements de défaillance et de non-défaillance parmi tous les événements extraits,

- appliquer une programmation logique inductive (ILP) par l'alimentation de la programmation logique inductive avec les événements de défaillance et de non-défaillance, la programmation logique inductive générant un ensemble d'expressions de classe (CE), chaque expression de classe décrivant sous quelle condition une défaillance de sa classe de défaillance survient, dans lequel chaque expression de classe est combinée avec une précision prédictive qui indique la proportion d'événements de classe de défaillance et de non-défaillance couverts par ladite expression de classe, et

- délivrer en sortie au moins une classe de défaillance et une survenue de défaillance prédictive et initier des mesures de maintenance pour la maintenance de l'installation lorsque l'équipement d'installation entre dans un autre état que lesdits états et si l'autre état concorde avec au moins une expression de classe de l'ensemble généré d'expressions de classe et si la précision prédictive dépasse un seuil prédéterminé.

5. Système selon la revendication précédente, dans lequel une opération supplémentaire comprend : la mise en ordre des expressions de classe selon leur précision prédictive.

6. Système selon au moins l'une des revendications de système précédentes, dans lequel une opération supplémentaire comprend : l'alimentation de la programmation logique inductive uniquement avec des événements de défaillance sélectionnés.

7. Produit de programme informatique qui est exécuté par un ou plusieurs processeurs d'un ordinateur afin de réaliser un procédé selon l'une quelconque des revendications de procédé précédentes.

8. Support de stockage lisible par ordinateur ayant un produit de programme informatique selon la revendication précédente.

FIG 1

# FIG 2

Failure:
Pred. acc.: 0.35

OWL: Thing

Pred. acc.: 0.57

Equipment

Pred. acc.: 0.59

Equipment and has Component owl: Thing

Pred. acc.: 0.69

Equipment and has Component X

FIG 3

EP 4 006 674 B1

**EP 4 006 674 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 2019196460 A1
- EP 2447845 A1

- US 2018075359 A1

### Non-patent literature cited in the description

- **JENS LEHMANN.** DL-Learner: Learning Concepts in Description Logics. *The Journal of Machine Learning Research,* 2009, vol. 10, 2639-2642